# EUROPÄISCHE PATENTSCHRIFT

(11) **EP 3 792 485 B1**
(45) Veröffentlichungstag und Bekanntmachung des Hinweises auf die Patenterteilung: **06.12.2023**
(21) Anmeldenummer: 20192112.9
(22) Anmeldetag: 21.08.2020
(51) Int. Cl.: F03D 7/04

(54) **VERFAHREN ZUM STEUERN EINER WINDENERGIEANLAGE SOWIE VORRICHTUNG DAFÜR**
METHOD FOR CONTROLLING A WIND TURBINE AND DEVICE FOR SAME
PROCÉDÉ DE COMMANDE D'UNE ÉOLIENNE AINSI QUE DISPOSITIF CORRESPONDANT

(30) Priorität: 11.09.2019 DE 102019124400
(43) Veröffentlichungstag der Anmeldung: 17.03.2021
(73) Patentinhaber: Wobben Properties GmbH, 26607 Aurich (DE)
(72) Erfinder: Giertz, Helge, 26789 Leer (DE)
(74) Vertreter: Eisenführ Speiser

(56) Entgegenhaltungen:
- EP-A1- 3 382 982
- CN-A- 108 832 720
- US-A1- 2012 243 416
- US-A1- 2018 349 445

## Beschreibung

Die Erfindung betrifft den Bereich der Windenergieanlagen und hierbei insbesondere die Steuerung der Windenergieanlagen.

Bislang wurden Einzelwindenergieanlagen im Wesentlichen durch eine in der Windenergieanlage vorhandene Steuerung gesteuert, die beispielsweise eigenständig die vorherrschenden Windverhältnisse detektiert und in Abhängigkeit dieser Windverhältnisse den Betrieb der Windenergieanlage steuert. Im Falle eines Windparks wurden diese Steueraufgaben teilweise noch ausschließlich auf Windparkregler ausgelagert, die individuell einzelne Windenergieanlagen des Windparks zusätzlich zu weiterhin in den Einzelanlagen vorgesehenen Steuerungen mitgesteuert haben.

Mit zunehmendem Maße werden jedoch Betriebsführungsaufgaben in Windparks immer wichtiger. Dies resultiert einerseits aus Baugenehmigungsauflagen, andererseits aber auch aus Energie- und Vermarktungsregeln. Demnach muss ein Zugriff zur Steuerung von Windenergieanlagen, insbesondere das Stoppen und Inbetriebsetzen von diversen unterschiedlichen externen, außerhalb eines Windparks liegenden Steuereinrichtungen ermöglicht werden. Diese Betriebsführungsaufgaben werden teilweise von unabhängigen Steuereinrichtungen zunehmend automatisiert ausgeführt, um so die genannten Anforderungen zu erfüllen. Weiterhin wird auch zunehmend verlangt, dass mandantenfähige Systeme bereitgestellt werden, mit denen eine individuelle Priorisierung von Steueraktionen gewährleistet werden kann.

Hierbei besteht das Problem, dass Windenergieanlagen und Windparks heutzutage üblicherweise mit einem SCADA-System und zumindest vom Windenergieanlagenhersteller standardisierter SCADA-Kommunikation ausgestattet sind. SCADA ist die Abkürzung für Supervisory Control and Data Acquisition und beschreibt Computersysteme zum Steuern und Regeln von Anlagen, hier der Windenergieanlage oder der Windenergieanlagen eines Windparks. Dieses SCADA-System ist als individuell auf die Aufgaben angepasstes Steuerungs- und Regelungssystem anzusehen, das beispielsweise in Abhängigkeit von Zugriffsrechten empfangene Steuerbefehle an die Windenergieanlagen übertragen kann. Da das SCADA-System ein auf Aufgaben des Gesamtsystems angepasstes System ist und die Erfüllung von Betriebsführungsaufgaben in früherer Zeit noch unnötig war, sind bestehende SCADA-Systeme bislang in der Regel nicht mit einer Betriebsführungssoftware realisiert. Dennoch werden bestehende SCADA-Systeme bereits heute zur Realisierung der genannten Anforderungen für Betriebsführungsaufgaben verwendet, wodurch immer häufiger kollisionsbehafte Betriebssituationen auftreten.

Allgemein ist aus dem Bereich klassischer Kraftwerke zwar eine mandantenfähige Betriebsführungssoftware bekannt, die eine individuelle Priorisierung von Steuerbefehlen zulässt. Jedes Kraftwerk ist in der Regel mit einer individuell eingestellten und verwalteten Betriebsführungssoftware ausgestattet. Durch eine derartige Betriebsführungssoftware lie-ßen sich die oben genannten Probleme kollisionsbehafteter Betriebe, insbesondere durch kollidierende Steuerbefehle, durch Priorisierung und Synchronisierung mit anderen Instanzen auch im Bereich der Windenergieanlagen vermeiden.

Eine Einführung einer derartigen Betriebsführungssoftware in bereits mit einem bestehenden SCADA-System ausgestattete Windparks ist aufgrund der vorherrschenden Hard- und Softwareausbildung des bestehenden Systems jedoch in der Regel nicht möglich. Ein bestehendes SCADA-System wäre demnach auch durch eine im Maße einer Betriebsführungssoftware ausgeführte Steuerung mit individuell unabhängigen, teilweise kollidierenden Steuerbefehlen überfordert.

Insgesamt kann also eine einwandfreie Funktion mit parallel betriebenen unterschiedlichen Steuersystemen mittels bestehender SCADA-Systeme nicht gewährleistet werden. Ein einwandfreier, insbesondere effizienter, Betrieb des bestehenden Systems, bei dem gleichzeitig die genannten Betriebsführungsaufgaben erfüllt werden können, ist demnach nicht möglich und kann nur mit großer struktureller Änderung der Systeme ermöglicht werden.

In der prioritätsbegründenden deutschen Patentanmeldung hat das Deutsche Patent- und Markenamt die folgenden Dokumente recherchiert: DE 10 2015 005 252 A1; US 2013/0 272 844 A1; WO 2019/ 030 133 A1; GOLDSCHMIDT, T. et al.: Cloud-Based Control: A Multi-Tenant, Horizontally Scalable Soft-PLC. In: 2015 IEEE 8th International Conference on Cloud Computing (CLOUD 2015), 27 June - 2 July 2015, New York, NY, USA, pp. 909 - 916; Priority queue. In: Wikipedia, the free encyclopedia. Bearbeitungsstand: 9. Juni 2019. URL: https://en.wikipedia.org/w/index.php?title=Priority_queue&oldid=901114442 [abgerufen am 14.04.2020]; SEDGEWICK, R. et al.: Algorithms, 4th Edition, Chapter 2.4: Priority Queues, OrderedArrayMaxPQ.java. Bearbeitungsstand: 20. Oktober 2017. URL: https://algs4.cs.princeton.edu/24pq/OrderedArrayMaxPQ.java.html [abgerufen am 15.04.2020] und SEDGEWICK, R. et al.: Algorithms, 4th Edition, Chapter 2.4: Priority Queues. Bearbeitungsstand: 27. Dezember 2017. URL: https://algs4.cs.princeton.edu/24pq/ [abgerufen am 15.04.2020].

Ferner offenbart Dokument EP 3 382 982 A1 das Senden von Steuerbefehlen, die in einer Ausführungswarteschlange bereitgestellt werden und die gemäß ihrer Priorität und eines mit ihr übertragenen Zeitschlitzes zum gewünschten Zeitschlitz ausgeführt werden. Ferner offenbart Dokument US 2012/0243416 A1 ein Kontrollzentrum, das Steuerbefehle für mehrere Energieerzeugungsvorrichtungen bereitstellen kann, wobei eine Ausführungswarteschlange offenbart ist, in der mehrere auszuführende Befehle mit ihren Prioritäten gespeichert werden.

Aufgabe der vorliegenden Erfindung ist es daher, ein Verfahren und eine Vorrichtung zum Steuern mindestens einer Windenergieanlage zu finden, mit dem Betriebsführungsaufgaben in Windparks ohne signifikante Erweiterung der bestehenden Hard- und Software gewährleistet werden können, um insbesondere kollisionsbehaftete Betriebe von einzelnen Windenergieanlagen oder Windparks zu vermeiden. Jedenfalls ist es Aufgabe der vorliegenden Erfindung, eine Alternative zu bisherigen Steuerverfahren für Windenergieanlagen zu finden.

Eine erfindungsgemäße Lösung wird in Anspruch 1 vorgeschlagen. Die Erfindung umfasst ein Verfahren zum Steuern mindestens einer Windenergieanlage. Das Verfahren umfasst zunächst das Empfangen eines Steuerbefehls für die oder eine der Windenergieanlagen. Weiter wird dann detektiert, dass der empfangene Steuerbefehl mit mindestens einem in einem Speicher gespeicherten Steuerbefehl kollidiert. Daraufhin wird eine dem empfangenen Steuerbefehl zugeordnete Priorität und ein Empfangszeitpunkt des empfangenen Steuerbefehls erfasst und der empfangene Steuerbefehl in dem Speicher mit der zugeordneten Priorität und dem Empfangszeitpunkt gespeichert. Weiter wird eine Reihenfolge der gespeicherten kollidierenden Steuerbefehle in Abhängigkeit von den zugeordneten Prioritäten und Empfangszeitpunkten erstellt oder aktualisiert. Daraufhin wird der Steuerbefehl mit der höchsten Priorität und dem ältesten Empfangszeitpunkt als aktuell ausgeführter Steuerbefehl ausgeführt und der oder die übrigen weiteren kollidierenden gespeicherten Steuerbefehle zur späteren Ausführung gespeichert.

Demnach wird ein Steuerbefehl für eine Windenergieanlage empfangen und detektiert, dass dieser empfangene Steuerbefehl mit einem bereits gespeicherten Steuerbefehl kollidiert. Demnach sind beispielweise ein oder mehrere Steuerbefehle, die mit dem empfangenen Steuerbefehl kollidieren, bereits gespeichert. Jedem der Steuerbefehle, nämlich dem empfangenen Steuerbefehl sowie auch den bereits gespeicherten Steuerbefehlen, ist jeweils eine Priorität und ein Empfangszeitpunkt zugeordnet. Gemäß dem Verfahren wird dann neben dem oder den bereits gespeicherten Steuerbefehlen, die mit ihrer Priorität und ihrem Empfangszeitpunkt gespeichert sind, auch der empfangene Steuerbefehl, der mit den gespeicherten Steuerbefehlen kollidiert, zusammen mit seiner Priorität und seinem Empfangszeitpunkt gespeichert.

Gemäß dem Verfahren ergibt sich vorzugsweise eine Liste oder Tabelle im Speicher, die mindestens zwei Steuerbefehle umfasst, denen jeweils eine Priorität und ein Empfangszeitpunkt zugeordnet ist. Ein Steuerbefehl zusammen mit seiner Priorität und seinem Empfangszeitpunkt kann auch als Element bezeichnet werden. Eine Liste mit zwei Elementen, also zwei Steuerbefehlen mit zugeordneten Prioritäten und Empfangszeitpunkten, entsteht vorzugsweise durch Erstellen einer derartigen Liste nach dem Empfangen eines Steuerbefehls, der mit einem einzigen gespeicherten Steuerbefehl kollidiert. Besteht bereits eine Liste, da bereits mehrere gespeicherte Steuerbefehle empfangen und gespeichert wurden, die miteinander kollidieren, wird der empfangene Steuerbefehl, insbesondere als neues Element mit in der Liste gespeichert. In dem Fall wird diese Liste in einem weiteren Schritt im Hinblick auf die Reihenfolge der Speicherbefehle, insbesondere Elemente, aktualisiert, also die Steuerbefehle sortiert. Hierbei werden die Steuerbefehle in Abhängigkeit von ihrer Priorität und in Abhängigkeit von ihrem Empfangszeitpunkt sortiert.

Weiterhin wird nach dem Sortieren, also dem Aktualisieren oder Erstellen der Reihenfolge der Steuerbefehle, der Steuerbefehl mit der höchsten Priorität und dem ältesten Empfangszeitpunkt, also dem Zeitpunkt, der am weitesten in der Vergangenheit liegt, ausgeführt.

Dieser ausgeführte Steuerbefehl wird auch als aktuell ausgeführter Steuerbefehl bezeichnet.

Ein Ausführen von kollidierenden Steuerbefehlen wird somit mit einem vorhandenen SCADA-System, das bislang zur Abarbeitung sequenziell empfangener Steuerbefehle in ihrer Empfangsreihenfolge ausgebildet ist, durch einfache Anpassung des SCADA-Systems möglich. Durch Speicherung kollidierender Steuerbefehle und eine einfach zu implementierende Sortierung der gespeicherten Befehle wird mehreren auf eine Windenergieanlage zugreifenden Steuereinheiten so die Möglichkeit gegeben, auf die Windenergieanlage zuzugreifen, wobei gleichzeitig rudimentäre Funktionen einer Betriebsführungssoftware integriert werden, um in geeignetem Maße kollidierende Betriebszustände unterschiedlicher Windenergieanlagen zu vermeiden.

Wurde demnach beispielsweise von einem Energienetzbetreiber ein Stopp-Steuerbefehl an sämtliche Windenergieanlagen eines oder mehrerer Windparks gesendet, so stoppten die Steuerungen der Windenergieanlagen den Betrieb, das beispielsweise das Überführen in einen Trudelbetrieb umfasst. Ohne die Erfindung konnte dieser Stoppbefehl beispielsweise durch einen anderen Stoppbefehl überschrieben werden, um beispielsweise eine Umweltschutzfunktion zu realisieren. Wurde dann der Stoppbefehl zur Realisierung der Umweltschutzfunktion zurückgenommen, wurde die Anlage wieder in Normalbetrieb versetzt, auch wenn der Netzbetreiber weiterhin aufgrund der Netzstabilität ein Stoppen der Windenergieanlage bevorzugt hätte.

Gemäß dem neuen Verfahren werden nun alle kollidierenden Steuerbefehle gemäß ihrer Reihenfolge gespeichert und solange ein kollidierender Befehl noch nicht abgearbeitet ist, beispielsweise aufgrund seiner Priorität oder seines Empfangszeitpunkts, wird dieser für eine spätere Ausführung gespeichert. Ein kollisionsbehafteter Betrieb mehrerer Windenergieanlagen kann so für eine Vielzahl fallbezogener Konstellationen verhindert werden.

Gemäß einer ersten Ausführungsform ist jedem gespeicherten Steuerbefehl ein Steuerabbruchbefehl zugeordnet. Im Falle, dass ein einem Steuerbefehl zugeordneter Steuerabbruchbefehl empfangen wird, wird dann der zugeordnete Steuerbefehl gelöscht, wenn dieser zur späteren Ausführung gespeichert ist. Alternativ wird der zugeordnete Steuerbefehl beendet und gelöscht, wenn dieser als aktuell ausgeführter Steuerbefehl zurzeit ausgeführt wird. Zusätzlich wird im zuletzt genannten Fall der in der Reihenfolge als nächster zum aktuell ausgeführten Steuerbefehl gespeicherte Steuerbefehl als neuer aktuell ausgeführter Steuerbefehl ausgeführt.

Eine Reihenfolge gespeicherter kollidierender Steuerbefehle wird somit gemäß ihrer Priorität und ihrem Empfangszeitpunkt nacheinander abgearbeitet. Hierbei wird von einem aktuell ausgeführten Steuerbefehl, der also in der Reihenfolge an einer ersten Stelle steht, zum nächsten Steuerbefehl als aktuell ausgeführter Steuerbefehl gewechselt, wenn ein Steuerabbruchbefehl des aktuell ausgeführten Steuerbefehls empfangen wird. Die Abarbeitung erfolgt so lange, wie noch mehrere kollidierende Steuerbefehle gespeichert sind.

Zusätzlich kann auch ein zur späteren Ausführung gespeicherter Steuerbefehl durch einen zugeordneten Steuerabbruchbefehl aus der Reihenfolge der kollidierenden Steuerbefehle entfernt werden. Das heißt, ein empfangener Steuerbefehl, der beispielsweise in der Reihenfolge eine geringere Priorität als ein aktuell ausgeführter Steuerbefehl aufweist, kann bereits vor seiner Ausführung durch einen zugeordneten Steuerabbruchbefehl aus der Reihenfolge entfernt werden, sodass dieser niemals ausgeführt wird.

Hierdurch wird sichergestellt, dass ein neuer Steuerbefehl einen zuvor empfangenen Steuerbefehl nicht automatisch überschreiben kann, sondern jeder Steuerbefehl durch seinen zugeordneten Steuerabbruchbefehl zurückgenommen werden muss. So ist zu jedem Zeitpunkt ein definierter Zustand der Steuerung gewährleistet.

Gemäß einerweiteren Ausführungsform weist jeder gespeicherte Steuerbefehl einen Identifikator (PID) einer Steuereinrichtung auf, von der der Steuerbefehl empfangen wurde oder die den Steuerbefehl ausgesendet hat. Jedem Identifikator ist eine Priorität zugeordnet, sodass die Priorität anhand des Identifikators erfasst wird.

So genügt es, die Priorität der Steuereinrichtungen in einer das Verfahren ausführenden Vorrichtung, beispielsweis einer Windenergieanlagensteuerung oder einer Windparksteuerung, für die Steuereinrichtungen zu hinterlegen. Die Steuereinrichtung an sich kann einen Steuerbefehl demnach wie bisher, beispielsweise mit einem unveränderten Protokoll, aussenden. Ein Identifikator für einen Steuerbefehl ist ohnehin bei üblichen SCADA-Systemen oder deren Protokollen üblich und wird daher bereits heute übertragen. So kann in einfacher Weise eine Priorität aus dem Identifikator entnommen oder dieser in eine Priorität in der Vorrichtung selbst umgewandelt werden. Ein Anpassen von Nachrichtenpaketen, die von einer Steuereinrichtung an eine Vorrichtung, die das Verfahren ausführt, gesendet werden, ist somit nicht nötig, sodass in einfacher Weise bereits bestehende Systeme auf das neue Verfahren angepasst werden können.

Gemäß einer weiteren Ausführungsform weist jeder gespeicherte Steuerbefehl einen Identifikator (PID) einer Steuereinrichtung auf, die den Steuerbefehl ausgesendet hat, wobei im Falle eines empfangenen Steuerbefehls, der einen Identifikator aufweist, der identisch mit einem Identifikator eines zuvor gespeicherten kollidierenden Steuerbefehls ist, zunächst analog zur oben beschriebenen Vorgehensweise die Priorität und der Empfangszeitpunkt des empfangenen Steuerbefehls erfasst und der empfangene Steuerbefehl zusammen mit seiner Priorität und dem Empfangszeitpunkt gespeichert wird. Daraufhin wird die Reihenfolge der gespeicherten kollidierenden Steuerbefehle aktualisiert und der Steuerbefehl mit höchster Priorität und dem ältesten Empfangszeitpunkt ausgeführt. Gemäß dieser Ausführungsform wird jedoch im Falle, dass dem empfangenen Steuerbefehl eine Unterpriorität zugeordnet ist, die Reihenfolge der gespeicherten kollidierenden Steuerbefehle mit gleichem Identifikator zusätzlich anhand einer Subpriorität erstellt oder aktualisiert. Im Falle, dass der empfangene Steuerbefehl keine Unterpriorität aufweist, wird der zuvor gespeicherte kollidierende Steuerbefehl, der den gleichen Identifikator wie der empfangene Steuerbefehl aufweist, gelöscht.

Gemäß dieser Ausführungsform wird vermieden, dass, wenn eine Steuereinrichtung einen Steuerbefehl sendet, der nicht kompatibel mit einem Steuerbefehl ist, der zuvor von derselben Steuereinrichtung gesendet wurde, der zuvor gesendete Steuerbefehl gelöscht wird, auch wenn kein Steuerabbruchbefehl für diesen Befehl empfangen wurde. Hierbei wird angenommen, dass die Tatsache, dass von einer Steuereinrichtung ein neuer Steuerbefehl gesendet wird, anzeigt, dass ein zuvor gesendeter Steuerbefehl nicht mehr weiterverfolgt werden soll. Vorzugsweise nur in diesem Ausnahmefall wird somit davon abgesehen, einen Steuerbefehl ohne Steuerabbruchbefehl zu löschen.

Gemäß einer weiteren Ausführungsform ist der Steuerbefehl einer von mehreren vordefinierten Steuerarten zugeordnet. Steuerbefehle werden als kollidierende Steuerbefehle detektiert, wenn diese der gleichen Steuerart zugeordnet sind und insbesondere für die gleiche Windenergieanlage bestimmt sind.

Es werden also Steuerarten definiert, für die dann jeweils mehrere Steuerbefehle definiert sind. Kollidierende Steuerbefehle bezeichnen alle Steuerbefehle, die derselben Steuerart zugeordnet sind. Auf einfache Art und Weise lässt sich somit bestimmen, ob ein empfangener Steuerbefehl mit einem oder mehreren gespeicherten Steuerbefehlen kollidiert oder nicht. Demnach wird beispielsweise in der Vorrichtung, die das Verfahren ausführt, eine Liste oder Tabelle angelegt und die Steuerarten mit den zugehörigen Steuerbefehlen hinterlegt. Anhand dieser Tabelle kann dann nach dem Empfangen eines Steuerbefehls einfach geprüft werden, welcher Steuerart der empfangene Steuerbefehl zuzuordnen ist und ob schon Steuerbefehle dieser Steuerart gespeichert sind.

Gemäß einer weiteren Ausführungsform weist jeder Steuerbefehl eine von mindestens drei Prioritäten auf. Steuerbefehle weisen vorzugsweise eine höchste Priorität auf, wenn sie von einem Windenergieanlagenhersteller gesendet werden. Steuerbefehle weisen weiter eine niedrigste Priorität auf, wenn sie vom Windenergieanlagenbetreiber gesendet werden. Steuerbefehle weisen vorzugsweise eine zwischen der niedrigsten und höchsten Priorität liegende Priorität auf, wenn sie von einer die Windenergieanlage steuernden Steuerung gesendet werden. Eine derartige Einteilung der Prioritäten ist vorteilhaft, um möglichst zeitnah auf regionsübergreifende globale Steuerbefehle reagieren zu können.

Gemäß einer weiteren Ausführungsform weisen Steuerbefehle, die die niedrigste Priorität aufweisen, zusätzlich eine Unterpriorität auf, um im Falle mehrerer Betreiber den mehreren Betreibern unterschiedliche Unterprioritäten zuzuordnen. Hierbei wird berücksichtigt, dass im Falle mehrerer Betreiber auch eine Priorisierung der Betreiber im Hinblick auf eine Steuerung möglich ist.

Gemäß einer weiteren Ausführungsform sind zumindest alle Steuerbefehle derselben Steuerart zugeordnet, die zum Stoppen einer Windenergieanlage dienen. Diese Steuerbefehle umfassen insbesondere das Überführen der Windenergieanlage in einen Zustand mit vollständig gestopptem Rotor. Alternativ oder zusätzlich umfasst die Steuerart den Steuerbefehl, die Windenergieanlage in einen Trudelbetrieb zu überführen. Zusätzlich oder alternativ umfasst die Steuerart den Steuerbefehl, die Windenergieanlage in einen Sonderbetriebsmodus oder Schutzmodus zu überführen. Der Sonderbetriebsmodus oder Schutzmodus bezeichnet insbesondere einen Tierschutzmodus, insbesondere einen Fledermaus- oder Vogelschutzbetrieb mit reduzierter und/oder vordefinierter maximaler Drehzahl des Rotors. Ein weiteres Beispiel für einen Sonderbetriebsmodus ist ein Schattenwurfmodus zum Verhindern eines vordefinierten Schattenwurfs des Rotors. Es ist besonders vorteilhaft, diese Steuerbefehle in einer Steuerart zusammenzufassen und als Stoppbefehle zu bezeichnen, da diese gegenüber einem Normalbetrieb in kollidierender Weise häufig angefordert werden und in priorisierter Weise eine Windenergieanlage mit nur einem dieser Steuerbefehle betrieben werden darf oder kann.

Gemäß einer weiteren Ausführungsform wird im Fall, dass im Speicher kein Steuerbefehl hinterlegt ist, der der Steuerart, die zum Stoppen einer Windenergieanlage dient, zuzuordnen ist, die Windenergieanlage nicht gestoppt, sondern betrieben. Hierbei wird die Windenergieanlage in einem vordefinierten Betriebspunkt oder mit einer vordefinierten Betriebskurve betrieben, der bzw. die insbesondere durch einen Steuerbefehl einer anderen Steuerart vorgegeben ist. Alternativ oder zusätzlich entspricht der Betriebspunkt oder die Betriebskurve einem bzw. einer zuletzt, insbesondere vor dem Stoppen, ausgeführten Betriebsmodus bzw. Betriebskurve.

Das bedeutet, dass sobald alle Steuerbefehle, die der Steuerart zuzuordnen sind, die zum Stoppen einer Windenergieanlage dient, durch ihre Steuerabbruchbefehle aufgehoben wurden, automatisch die Windenergieanlage wieder in einen Betriebspunkt, insbesondere einer Betriebskurve, überführt wird und in diesem Betriebspunkt, insbesondere dieser Betriebskurve, betrieben wird.

Gemäß einer weiteren Ausführungsform umfasst der Steuerbefehl eine Sollwertvorgabe für den Betrieb der Windenergieanlage. Der Steuerbefehl ist dann einer Steuerart zum Betreiben der Windenergieanlage zugeordnet. Besonders bevorzugt sind demnach alle Steuerbefehle, die eine Sollwertvorgabe für den Betrieb der Windenergieanlage umfassen, als kollidierende Steuerbefehle zu betrachten. Weiter sind insbesondere die Steuerbefehle, die der Steuerart zum Betreiben und Steuerbefehle, die der Steuerart zugeordnet sind, die zum Stoppen der Windenergieanlage dienen, kollidierende Steuerbefehle. Die Sollwertvorgabe eines Steuerbefehls umfasst insbesondere mindestens eines von einem Wirkleistungssollwert, einem Blindleistungssollwert, einem Scheinleistungssollwert, einem Spannungssollwert, einem Stromsollwert oder einem Phasenwinkelsollwert.

Somit lassen sich auch kollidierende Steuerbefehle zum Betreiben der Windenergieanlage nacheinander oder priorisiert ausführen.

Außerdem umfasst die Erfindung ein Computerprogrammprodukt. Das Computerprogrammprodukt umfasst Instruktionen, die, wenn sie auf einer Rechnereinheit, insbesondere einer Leitwarte, einem Clusterregler, einem Windparkregler oder einer Windenergieanlagensteuerung ausgeführt werden, die Rechnereinheit veranlassen, das Verfahren nach einer der vorgenannten Ausführungsformen auszuführen.

Weiter betrifft die Erfindung eine Vorrichtung zum Ausführen des Verfahrens nach einer der vorgenannten Ausführungsformen. Die Vorrichtung ist vorzugsweise eine Leitwarte, ein Clusterregler, ein Windparkregler oder eine Windenergieanlagensteuerung. Die Vorrichtung umfasst mindestens eine Datenschnittstelle zum Verbinden mit mehreren Steuereinrichtungen zum Empfangen von Steuerbefehlen und Steuerabbruchbefehlen.

Gemäß einer ersten Ausführungsform der Vorrichtung ist diese als ein mit mehreren Windenergieanlagen über eine Datenverbindung verbindbarer Windparkregler ausgebildet, der einen Speicher zum Speichern der Steuerbefehle aufweist und eingerichtet ist, das Verfahren nach einer der vorgenannten Ausführungsformen auszuführen. Die Vorrichtung ist hierbei insbesondere zum Ausführen des Steuerbefehls mit der höchsten Priorität und dem ältesten Empfangszeitpunkt als aktuell ausgeführter Steuerbefehl eingerichtet, wobei hierzu aktuelle Steuerbefehle über eine Datenverbindung an eine dem Steuerbefehl zugeordnete Windenergieanlage übertragbar sind.

Gemäß einer weiteren Ausführungsform der Vorrichtung umfasst diese einen Speicher mit mehreren Speicherbereichen, wobei jeder Speicherbereich genau einer von mehreren Windenergieanlagen zugeordnet ist, die mit der Vorrichtung verbindbar sind. Vorzugsweise sind im Speicherbereich einer Windenergieanlage kollidierende Steuerbefehle speicherbar. Besonders bevorzugt ist jeder Speicherbereich in mehrere Unterspeicherbereiche aufgegliedert, wobei in jedem Unterspeicherbereich jeweils alle Steuerbefehle einer Steuerart im Falle kollidierender empfangener Steuerbefehle gespeichert werden. Somit ist jeder Unterspeicherbereich eines Speicherbereichs einer Windenergieanlage genau einer Steuerart zugeordnet.

Weiterhin betrifft die Erfindung ein System mit einer Vorrichtung nach einer der genannten Ausführungsformen und mehreren Steuervorrichtungen zum Erzeugen von Steuerbefehlen und Steuerabbruchbefehlen sowie mehreren Windenergieanlagen zum Ausführen der Steuerbefehle.

Weitere Ausführungsformen ergeben sich anhand der in den Figuren näher erläuterten Ausführungsbeispiele. Hierbei zeigen:
- Fig. 1: eine Windenergieanlage,
- Fig. 2: einen Windpark,
- Fig. 3: mehrere Steuervorrichtungen, die über einen Windparkregler mit mehreren Windenergieanlagen verbunden sind, und
- Fig. 4: die Schritte des Verfahrens.

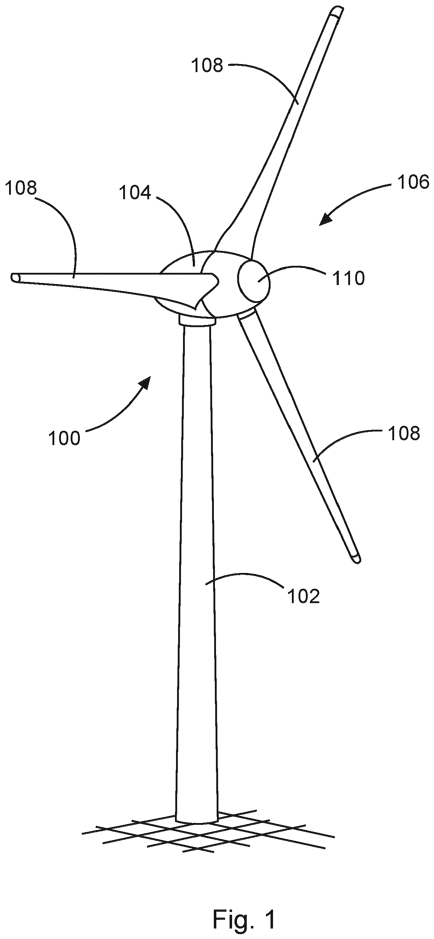

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

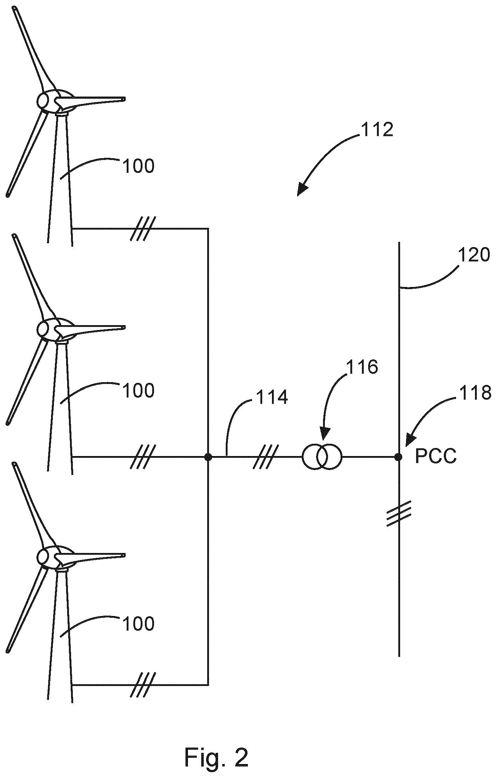

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

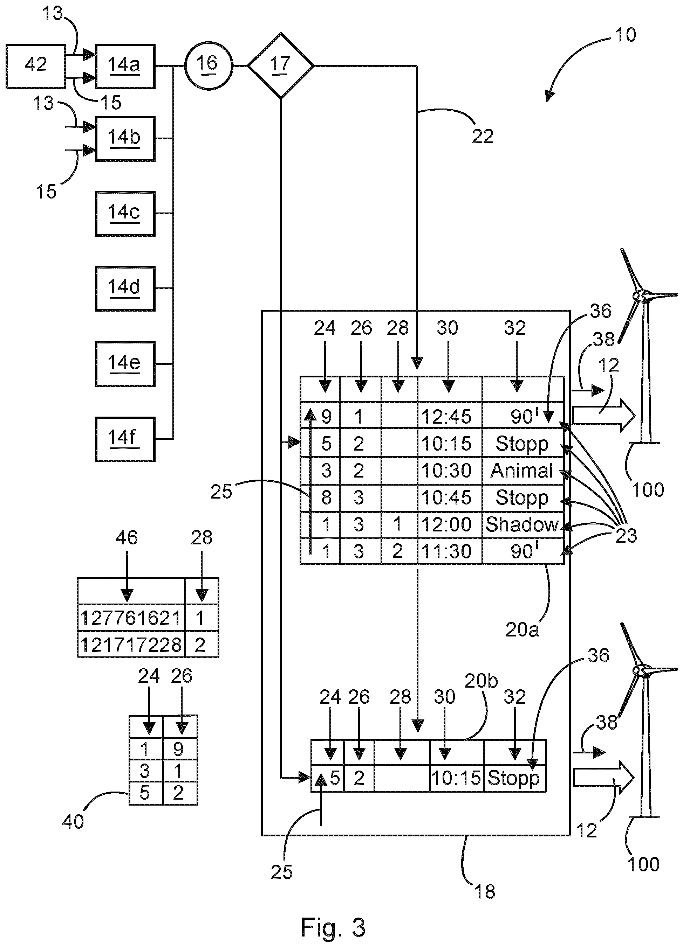

Fig. 3 zeigt nun die in Fig. 2 nicht dargestellte Steuerung mit einem Windparkregler 10, der mit mehreren, hier zwei, Windenergieanlagen 100 jeweils über eine Datenleitung 12 verbunden ist. Der Windparkregler 10 umfasst mehrere Schnittstellen 14, über die jeweils Steuerbefehle 13 und Steuerabbruchbefehle 15 für die Windenergieanlagen 100 empfangbar sind. Die Steuerbefehle 13 werden über eine Rechnereinheit 16 und ein Auswerteelement 17 an eine Speicher 18 zur Speicherung weitergeleitet, während Steuerabbruchbefehle 15 dienen, um Speichereinträge zu löschen.

Gemäß diesem Ausführungsbeispiel sind zur besseren Übersicht nur zwei Speicherbereiche 20a, 20b des Speichers 18 dargestellt, die jeweils einer der Windenergieanlagen 100 zugeordnet sind. Im Auswerteelement 17 wird geprüft, ob es sich bei dem empfangenen Befehl 13, 15 um einen Steuerbefehl 13 oder einen Steuerabbruchbefehl 15 handelt. Weiter wird in dem Auswerteelement 17 geprüft, an welche der Windenergieanlagen 100 der Steuerbefehl 13 oder Steuerabbruchbefehl 15 gerichtet ist oder ob dieser für alle Windenergieanlagen 100 gilt. Im Falle eines Steuerbefehls wird ebenfalls weiter geprüft, ob dieser Steuerbefehl ein kollidierender Steuerbefehl 22 ist.

Ist der empfangene Steuerbefehl 13 ein kollidierender Steuerbefehl 22, wird der Steuerbefehl dann in einen entsprechenden oder beide der Speicherbereiche 20a, 20b gespeichert. Im oberen Speicherbereich 20a sind bereits mehrere kollidierende Steuerbefehle 23 gespeichert, die alle einer Steuerart zuzuordnen sind, die zum Stoppen, nämlich Außerbetriebsetzen der Windenergieanlage, dienen.

Die gespeicherten kollidierenden Steuerbefehle 23 sind in einer Reihenfolge 25 angeordnet, wobei jeder gespeicherte kollidierende Steuerbefehle 23 in einer Zeile jeweils zusammen mit einem Identifikator 24, einer Priorität 26, einer Unterpriorität 28, einem Empfangszeitpunkt 30 sowie einer auszuführenden Anweisung des Steuerbefehls 32 in einer Zeile gespeichert ist. Nach dem Empfangen eines neuen kollidierenden Steuerbefehls 22 wird die Reihenfolge 25 unter Beachtung der Priorität 26, der Unterpriorität 28 und der Empfangszeit 30 so sortiert, dass der Steuerbefehl mit der höchsten Priorität 26, ggf. der höchsten Unterpriorität 28 und dem ältesten Empfangszeitpunkt 30 an erster Position 36, hier also oberster Stelle, angeordnet ist.

Dieser Steuerbefehl 23 wird dann als aktuell ausgeführter Steuerbefehl 38 an eine Windenergieanlage 100 übertragen, um diese mit dem Steuerbefehl 38 zu betreiben.

Die Priorität 26 ist hierbei nur zur besseren Übersicht dargestellt. Tatsächlich ist eine Liste 40 gespeichert, die die Priorität anhand des Identifikators 24 festlegt. Jeder Steuereinrichtung 42, die einen Steuerbefehl über die Schnittstelle 14 an den Windparkregler 10 überträgt, ist einem Identifikator 24 zugeordnet, der dann anhand der Tabelle 40 in die Priorität 26 des Steuerbefehls überführt werden kann. Eine weitere Tabelle 44 ordnet zusätzlich einer Mandantenidentifikationsnummer 46 eine Unterpriorität 48 zu, sodass verschiedene Benutzer mit unterschiedlichen Mandantenidentifikationsnummern 46 anhand der Mandantenidentifikationsnummer 46 eine Unterpriorität zugeordnet werden kann, gemäß der dann ebenfalls die Reihenfolge 34 sortiert werden kann.

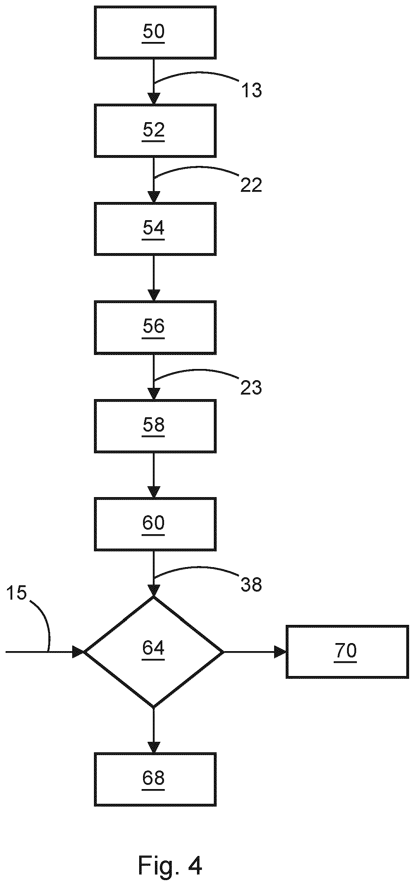

Fig. 4 zeigt die Schritte des Verfahrens gemäß einem Ausführungsbeispiel. Zunächst wird in einem Schritt 50 ein Steuerbefehl 13 für eine Windenergieanlage 100 empfangen. Im Schritt 52 wird detektiert, dass der empfangene Steuerbefehl 13 ein kollidierender Steuerbefehl 22 ist, woraufhin im Schritt 54 eine Priorität 26, ein Empfangszeitpunkt 30, eine Unterpriorität 28 sowie dessen auszuführende Anweisung 30 erfasst werden. In einem Schritt 56 wird der empfangene kollidierende Steuerbefehl 22 als gespeicherter kollidierender Steuerbefehl 23 gespeichert. Im darauffolgenden Schritt 58 wird eine Reihenfolge 25 gespeicherter kollidierender Steuerbefehle 23 aktualisiert. Zuletzt wird im Schritt 60 der Steuerbefehl an der ersten Position 36 mit höchster Priorität und ältestem Empfangszeitpunkt als aktuell ausgeführter Steuerbefehl 38 ausgeführt.

Im Schritt 64 wird dann ein einem Steuerbefehl 22, 23, 38 zugeordneter Steuerabbruchbefehl 15 empfangen und dann gleichzeitig im Schritt 64 geprüft, ob der Steuerabbruchbefehl 15 einem Steuerbefehl 23 der zur späteren Ausführung gespeichert ist oder dem aktuell ausgeführten Steuerbefehl 38 entspricht. Im Falle, dass der Steuerabbruchbefehl 15 einem Steuerbefehl 23 zugeordnet ist, der zur späteren Ausführung gespeichert ist, wird im Schritt 68 der dem Steuerabbruchbefehl zugeordnete Steuerbefehl gelöscht. Anderenfalls wird im Schritt 70 der aktuell ausgeführte Steuerbefehl 38 beendet und der in der Reihenfolge 25 als nächster zum aktuell ausgeführten Steuerbefehl gespeicherte Steuerbefehl 23 als neuer aktuell ausgeführter Steuerbefehl 38 ausgeführt.

## Patentansprüche

1. Verfahren zum Steuern einer Windenergieanlage (100) umfassend die Schritte:
a) Empfangen (50) eines Steuerbefehls (13) für die oder eine der Windenergieanlagen (100),
b) Detektieren (52), dass der empfangene Steuerbefehl (13) mit mindestens einem gespeicherten Steuerbefehl (23) kollidiert,
c) Erfassen (54) einer Priorität (26) und eines Empfangszeitpunkts (30) des empfangenen Steuerbefehls (13),
d) Speichern des empfangenen kollidierenden Steuerbefehls (22) in einem Speicher (18) mit der Priorität (26) und dem Empfangszeitpunkt (30) als gespeicherter Steuerbefehl (23),
e) Erstellen oder Aktualisieren (58) einer Reihenfolge (25) der gespeicherten kollidierten Steuerbefehle (23) in Abhängigkeit von den Prioritäten (26) und den Empfangszeitpunkten (30) der gespeicherten kollidierten Steuerbefehle (23) und
f) Ausführen des gespeicherten Steuerbefehls (23) mit höchster Priorität (26) und dem ältesten Empfangszeitpunkt (30) als aktuell ausgeführter Steuerbefehl (38).

2. Verfahren nach Anspruch 1, wobei jedem gespeicherten Steuerbefehl (23) ein Steuerabbruchbefehl (15) zugeordnet ist und im Falle, dass ein Steuerabbruchbefehl (15) empfangen wird, der dem empfangenen Steuerabbruchbefehl (15) zugeordnete gespeicherte Steuerbefehl (23)
- gelöscht (68) wird, wenn dieser, insbesondere zur späteren Ausführung, gespeichert ist oder
- beendet und gelöscht (70) wird, wenn dieser als aktuell ausgeführter Steuerbefehl (38) ausgeführt wird, wobei der in der Reihenfolge (25) als nächster zum aktuell ausgeführten Steuerbefehl gespeicherte Steuerbefehl (23) als neuer aktuell ausgeführter Steuerbefehl (38) ausgeführt wird.

3. Verfahren nach Anspruch 1 oder 2, wobei jeder gespeicherte Steuerbefehl einen Identifikator (24) einer Steuereinrichtung (42) umfasst, die den Steuerbefehl (13) ausgesendet hat und jedem Identifikator (24) eine Priorität (26) zugeordnet ist, sodass die Priorität (26) anhand des Identifikators (24) erfasst wird.

4. Verfahren nach einem der vorherigen Ansprüche, wobei jeder gespeicherte Steuerbefehl (23) einen Identifikator (24) einer Steuereinrichtung (42) umfasst, die den Steuerbefehl (13) ausgesendet hat, und im Falle eines empfangenen Steuerbefehls (13), der einen Identifikator (24) aufweist, der identisch mit einem Identifikator (24) eines zuvor gespeicherten kollidierenden Steuerbefehls (23) ist, vorzugsweise in Abhängigkeit von dem Identifikator (24), die Schritte c) - f) für den empfangenen Steuerbefehl ausgeführt werden, wobei
- im Falle, dass dem empfangenen Steuerbefehl (13) eine Unterpriorität (28) zugeordnet ist, in Schritt e) eine Reihenfolge (25) der gespeicherten kollidierenden Steuerbefehle (23) mit gleichem Identifikator (24) zusätzlich anhand der Unterpriorität (28) erstellt oder aktualisiert wird und
- anderenfalls, also im Falle, dass dem Steuerbefehl keine Unterpriorität (28) zugeordnet ist, der zuvor gespeicherte kollidierende Steuerbefehl (23) mit dem gleichen Identifikator (24) gelöscht wird.

5. Verfahren nach einem der vorhergehenden Ansprüche, wobei der Steuerbefehl einer oder mehreren vordefinierten Steuerarten zugeordnet wird, wobei Steuerbefehle als kollidierende Steuerbefehle detektiert werden, wenn diese der gleichen Steuerart zugeordnet werden und für die gleiche Windenergieanlage bestimmt sind.

6. Verfahren nach einem der vorhergehenden Ansprüche, wobei jeder Steuerbefehl (23) eine von mindestens drei Prioritäten (26) aufweist, wobei insbesondere Steuerbefehle (23) eine höchste Priorität (26) aufweisen, wenn sie von einem Windenergieanlagenhersteller gesendet werden und/oder Steuerbefehle (23) eine niedrigste Priorität (26) aufweisen, wenn sie vom Windenergieanlagenbetreiber gesendet werden und/oder Steuerbefehle (23) eine zwischen der niedrigsten und höchsten Priorität (26) liegende Priorität (26) aufweisen, wenn sie von einer die Windenergieanlagen steuernden Steuerung der Windenergieanlage (100) gesendet werden.

7. Verfahren nach Anspruch 6, wobei Steuerbefehle (23), die die niedrigste Priorität (26) aufweisen, zusätzlich eine Unterpriorität (28) aufweisen, um im Falle mehrerer Betreiber den mehreren Betreibern unterschiedliche Unterprioritäten zuzuordnen.

8. Verfahren nach einem der vorhergehenden Ansprüche, wobei zumindest alle Steuerbefehle (23) derselben Steuerart zuzuordnen sind, die zum Stoppen einer Windenergieanlage (100) dienen, nämlich insbesondere umfassend Befehle zum
- Überführen der Windenergieanlage (100) in einen Zustand mit vollständig gestopptem Rotor (106) und/oder
- Überführen der Windenergieanlage (100) in einen Trudelbetrieb und/oder
- Überführen der Windenergieanlage (100) in einen Sonderbetriebsmodus oder Schutzmodus, insbesondere umfassend einen Tierschutzmodus, insbesondere einen Fledermaus- oder Vogelschutzbetrieb mit reduzierter und/oder vordefinierter maximaler Drehzahl des Rotors (106), und/oder einen Schattenwurfmodus zum Verhindern eines vordefinierten Schattenwurfs des Rotors (106).

9. Verfahren nach einem der vorhergehenden Ansprüche, wobei im Fall, dass im Speicher (18) kein Steuerbefehl (23) hinterlegt ist, der der Steuerart zuzuordnen ist, die zum Stoppen einer Windenergieanlage (100) dient, die Windenergieanlage (100) in einem durch einen weiteren Steuerbefehl vorgegebenen Betriebspunkt oder mit einer vorgegebenen Betriebskurve betrieben wird.

10. Verfahren nach einem der Ansprüche 1 bis 7, wobei der Steuerbefehl (23) insbesondere einer Steuerart zum Betreiben der Windenergieanlage (100) zuzuordnen ist, und der Steuerbefehl (23) mindestens eine Sollwertvorgabe für den Betrieb der Windenergieanlage (100) umfasst, wobei die Sollwertvorgabe insbesondere mindestens eines umfasst von
- einem Wirkleistungssollwert,
- einem Blindleistungssollwert,
- einem Scheinleistungssollwert,
- einem Spannungssollwert,
- einem Stromsollwert und
- einem Phasenwinkelsollwert,
wobei insbesondere Steuerbefehle (23), die einer Steuerart zum Betreiben der Windenergieanlage (100) und Steuerbefehle (23), die einer Steuerart, die zum Stoppen einer Windenergieanlage (100) dient, zuzuordnen sind, kollidierende Steuerbefehle (23) sind.

11. Computerprogrammprodukt umfassend Befehle, die, wenn sie auf einer Rechnereinheit, insbesondere einer Leitwarte, einem Clusterregler, einem Windparkregler (10) oder einer Windenergieanlagensteuerung ausgeführt werden, die Rechnereinheit veranlassen, ein Verfahren nach einem der Ansprüche 1 bis 10 auszuführen.

12. Vorrichtung zum Ausführen des Verfahrens nach einem der Ansprüche 1 bis 10, umfassend mindestens eine Datenschnittstelle (14a bis 14f) zum Verbinden mit mehreren Steuereinrichtungen (42) zum Erzeugen von Steuerbefehlen und Steuerabbruchbefehlen,
wobei die Vorrichtung (10) ein mit mehreren Windenergieanlagen über mindestens eine Datenverbindung (12) verbindbarer Windparkregler (10) ist, der einen Speicher (18) zum Speichern von Steuerbefehlen (23) aufweist und eingerichtet ist, zum Ausführen des Steuerbefehls (23) mit der höchsten Priorität und dem ältesten Empfangszeitpunkt als aktuell ausgeführter Steuerbefehl (36), den aktuell auszuführenden Steuerbefehl (36) über die Datenverbindung (12) an die dem Steuerbefehl (23) zugeordnete Windenergieanlage (100) zu übertragen.

13. Vorrichtung nach Anspruch 12, wobei die Vorrichtung (10) mindestens einen Speicher (18) mit mehreren Speicherbereichen (20a, 20b) aufweist, wobei jeder Speicherbereich genau einer Windenergieanlage (100) zugeordnet ist, die mit der Vorrichtung (10) verbindbar ist, wobei die kollidierenden Steuerbefehle (23) einer Windenergieanlage (100) in dem der Windenergieanlage (100) zugeordneten Speicherbereich (20a, 20b) speicherbar sind.

14. System mit einer Vorrichtung (10) nach einem der Ansprüche 11 bis 13 und mehreren Steuervorrichtungen (42) zum Erzeugen von Steuerbefehlen (13) und Steuerabbruchbefehlen (15) sowie mehreren Windenergieanlagen (100) zum Ausführen der Steuerbefehle (13).

## Claims

1. A method of controlling a wind turbine (100) including the steps:
a) receiving (50) a control command (13) for the or one of the wind turbines (100),
b) detecting (52) that the received control command (13) conflicts with at least one stored control command (23),
c) detecting (54) a priority (26) and a reception time (30) of the received control command (13),
d) storing the received conflicting control command (22) in a memory (18) with the priority (26) and the reception time (30) as a stored control command (23),
e) preparing or updating (58) a sequence (25) of the stored conflicted control commands (23) in dependence on the priorities (26) and the reception times (30) of the stored conflicted control commands (23), and
f) executing the stored control command (23) with the highest priority (26) and the oldest reception time (30) as the currently executed control command (38).

2. A method according to claim 1 wherein a control abort command (15) is associated with each stored control command (23) and in the situation where a control abort command (15) is received the stored control command (23) associated with the received control abort command (15)
- is deleted (68) if same is stored in particular for later execution, or
- is terminated and deleted (70) if it is being executed as a currently executed control command (38), wherein the storage command (23) stored in the sequence (25) as the next to the currently executed control command is executed as a new currently executed control command (38).

3. A method according to claim 1 or claim 2 wherein each stored control command includes an identifier (24) of a control device (42) which has issued the control command (13) and a priority (26) is associated with each identifier (24) so that the priority (26) is detected on the basis of the identifier (24).

4. A method according to one of the preceding claims wherein each stored control command (23) includes an identifier (24) of a control device (42) which has issued the control command (13) and in the case of a received control command (13) which has an identifier (24) identical to an identifier (24) of a previously stored conflicting control command (23) steps c) - f) are preferably executed for the received control command in dependence on the identifier (24), wherein
- in the situation where a sub-priority (28) is associated with the received control command (13) in step a) a sequence (25) of the stored conflicting control command (23) with the same identifier (24) is additionally created or updated on the basis of the sub-priority (28), and
- otherwise, that is to say in the situation where no sub-priority (28) is associated with the control command the previously stored conflicting control command (23) with the same identifier (24) is deleted.

5. A method according to one of the preceding claims wherein the control command is associated with one or more predefined control types, wherein control commands are detected as conflicting control commands if same are associated with the same control type and are intended for the same wind turbine.

6. A method according to one of the preceding claims wherein each control command (23) has one of at least three priorities (26), wherein in particular control commands (23) have a highest priority (26) if they are sent by a wind turbine manufacturer and/or control commands (23) have a lowest priority (26) if they are sent by the wind turbine operator and/or control commands (23) have a priority between the lowest and the highest priority (26) when they are sent by a control means of the wind turbine (100), that controls the wind turbines.

7. A method according to claim 6 wherein control commands (23) which have the lowest priority (26) additionally have a sub-priority (28) in order in the case of a plurality of operators to associate different sub-priorities with the plurality of operators.

8. A method according to one of the preceding claims wherein at least all control commands (23) are to be associated with the same control type, that serve to stop a wind turbine (100), namely in particular including commands for
- transferring the wind turbine (100) into a state with a completely stopped rotor (106) and/or
- transferring the wind turbine (100) into a spinning mode and/or
- transferring the wind turbine (100) into a special operating mode or protection mode, in particular including an animal protection mode, in particular a bat or bird protection mode with a reduced and/or predefined maximum rotary speed of the rotor (106) and/or a shadow casting mode for preventing predefined shadow casting of the rotor (106).

9. A method according to one of the preceding claims wherein in the situation where there is stored in the memory (18) no control command (23) which is to be associated with the control type which serves for stopping the wind turbine (100) the wind turbine (100) is operated in an operating point predetermined by a further control command or with a predetermined operating curve.

10. A method according to one of claims 1 to 7 wherein the control command (23) is to be associated in particular with a control type for operation of the wind turbine (100) and the control command (23) includes at least one target setting for operation of the wind turbine (100), wherein the target setting includes in particular at least one of:
- an active power target value,
- a reactive power target value,
- an apparent power target value,
- a voltage target value,
- a current target value, and
- a phase angle target value,
wherein in particular control commands (23) which are to be associated with a control type for operation of the wind turbine (100) and control commands (23) which are to be associated with a control type which serves to stop a wind turbine (100) are conflicting control commands (23).

11. A computer program product including commands which when they are executed on a computing unit, in particular a control centre, a cluster controller, a wind farm controller (10) or a wind turbine control means, cause the computing unit to carry out a method according to one of claims 1 to 10.

12. Apparatus for carrying out the method according to one of claims 1 to 10, including at least one data interface (14a, to 14f) for connection to a plurality of control devices (42) for generating control commands and control abort commands, wherein the apparatus (10) is a wind farm controller (10) which can be connected to a plurality of wind turbines by way of at least one data connection (12) and has a memory (18) for the storage of control commands (23) and is adapted for execution of the control command (23) with the highest priority and the oldest reception time as the currently executed control command (36) to transmit the control command (36) which is currently to be executed to the wind turbine (100) associated with the control command (23) by way of the data connection (12).

13. Apparatus according to claim 12, wherein the apparatus has at least one memory (18) with a plurality of memory regions (20a, 20b), wherein each memory region is associated with precisely one wind turbine (100) which can be connected to the apparatus (10), wherein the conflicting control commands (23) of a wind turbine (100) can be stored in the memory region (20a, 20b) associated with the wind turbine (100).

14. A system comprising an apparatus (10) according to one of claims 11 to 13 and a plurality of control devices (42) for generating control commands (13) and control abort commands (15) as well as a plurality of wind turbines (100) for executing the control commands (13).

## Revendications

1. Procédé de commande d'une éolienne (100) comprenant les étapes suivantes :
a) la réception (50) d'un ordre de commande (13) pour la ou une des éoliennes (100),
b) la détection (52) que l'ordre de commande (13) reçu coïncide avec au moins un ordre de commande (23) enregistré,
c) la saisie (54) d'une priorité (26) et d'un moment de réception (30) de l'ordre de commande (13) reçu,
d) l'enregistrement de l'ordre de commande (22) coïncidant reçu dans une mémoire (18) avec la priorité (26) et le moment de réception (30) comme ordre de commande (23) enregistré,
e) l'établissement ou l'actualisation (58) d'un ordre (25) des ordres de commande (23) coïncidés enregistrés en fonction des priorités (26) et des moments de réception (30) des ordres de commande (23) coïncidés enregistrés et
f) la réalisation de l'ordre de commande (23) enregistré avec la plus haute priorité (26) et le moment de réception (30) le plus ancien comme ordre de commande (38) réalisé actuellement.

2. Procédé selon la revendication 1, dans lequel un ordre d'annulation de commande (15) est associé à chaque ordre de commande (23) enregistré et, dans le cas où un ordre d'annulation de commande (15) est reçu, l'ordre de commande (23) enregistré associé à l'ordre d'annulation de commande (15) reçu
- est supprimé (68) si celui-ci est enregistré en particulier pour une réalisation ultérieure ou
- est terminé et supprimé (70) lorsque celui-ci est réalisé comme ordre de commande (38) réalisé actuellement, dans lequel l'ordre de commande (23) enregistré dans l'ordre (25) comme ordre de commande réalisé comme le suivant par rapport à l'actuel est réalisé comme nouvel ordre de commande (38) réalisé actuellement.

3. Procédé selon la revendication 1 ou 2, dans lequel chaque ordre de commande enregistré comporte un identificateur (24) d'un dispositif de commande (42) qui a émis l'ordre de commande (13) et à chaque identificateur (24) est associée une priorité (26) de sorte que la priorité (26) soit détectée à l'aide de l'identificateur (24).

4. Procédé selon l'une des revendications précédentes, dans lequel chaque ordre de commande enregistré (23) comporte un identificateur (24) d'un dispositif de commande (42) qui a émis l'ordre de commande (13), et, dans le cas d'un ordre de commande (13) reçu qui présente un identificateur (24) qui est identique à un identificateur (24) d'un ordre de commande (23) coïncidant enregistré précédemment, de préférence en fonction de l'identificateur (24), les étapes c)-f) sont réalisées pour l'ordre de commande reçu, dans lequel
- dans le cas où une sous-priorité (28) est associée à l'ordre de commande (13) reçu, dans l'étape e), un ordre (25) des ordres de commande (23) coïncidants enregistrés avec le même identificateur (24) est établi ou actualisé en outre à l'aide de la sous-priorité (28) et
- sinon, également dans le cas où aucune sous-priorité (28) n'est associée à l'ordre de commande, l'ordre de commande (23) coïncidant enregistré précédemment avec le même identificateur (24) est supprimé.

5. Procédé selon l'une des revendications précédentes, dans lequel l'ordre de commande est associé à un ou plusieurs types de commande prédéfinis, dans lequel des ordres de commande sont détectés comme ordres de commande coïncidants lorsque ceux-ci sont associés au même type de commande et sont destinés à la même éolienne.

6. Procédé selon l'une des revendications précédentes, dans lequel chaque ordre de commande (23) présente une des au moins trois priorités (26), dans lequel en particulier des ordres de commande (23) présentent une priorité la plus élevée lorsqu'ils sont émis par un constructeur d'éolienne et/ou des ordres de commande (23) présentent une priorité la plus basse (26) lorsqu'ils sont émis par l'opérateur d'éolienne et/ou des ordres de commande (23) présentent une priorité (26) se trouvant entre la priorité la plus basse et la plus élevée lorsqu'ils sont émis par une commande commandant les éoliennes de l'éolienne (100).

7. Procédé selon la revendication 6, dans lequel des ordres de commande (23) qui présentent la priorité la plus basse (26), présentent en outre une sous-priorité (28) afin d'associer dans le cas de plusieurs opérateurs les sous-priorités différentes aux plusieurs opérateurs.

8. Procédé selon l'une des revendications précédentes, dans lequel au moins tous les ordres de commande (23) sont à associer au même type de commande qui servent à l'arrêt d'une éolienne (100), à savoir en particulier comprenant des ordres pour
- le transfert de l'éolienne (100) dans un état avec un rotor (106) arrêté complètement et/ou
- le transfert de l'éolienne (100) dans un mode en vrille et/ou
- le transfert de l'éolienne (100) dans un mode de fonctionnement spécial ou mode de protection, en particulier comprenant un mode de protection contre les animaux, en particulier un mode de protection contre les chauves-souris ou les oiseaux avec une vitesse de rotation maximale réduite et/ou prédéfinie du rotor (106), et/ou un mode de projection des ombres pour empêcher une projection des ombres prédéfinie du rotor (106).

9. Procédé selon l'une des revendications précédentes, dans lequel dans le cas où aucun ordre de commande (23) n'est enregistré dans la mémoire (18), lequel est à associer au type de commande qui sert à l'arrêt d'une éolienne (100), l'éolienne (100) fonctionne dans un point de fonctionnement prédéfini par un autre ordre de commande ou avec une courbe de fonctionnement prédéfinie.

10. Procédé selon l'une des revendications précédentes 1 à 7, dans lequel l'ordre de commande (23) est à associer en particulier à un type de commande pour le fonctionnement de l'éolienne (100), et l'ordre de commande (23) comporte au moins une prescription de valeur de consigne pour le fonctionnement de l'éolienne (100), dans lequel la prescription de valeur de consigne comporte en particulier au moins une parmi
- une valeur de consigne de puissance active,
- une valeur de consigne de puissance réactive,
- une valeur de consigne de puissance apparente,
- une valeur de consigne de tension,
- une valeur de consigne de courant et
- une valeur de consigne d'angle de phase,
dans lequel en particulier des ordres de commande (23) qui sont à associer à un type de commande pour le fonctionnement de l'éolienne (100) et des ordres de commande (23) qui sont à associer à un type de commande qui sert à l'arrêt d'une éolienne (100), sont des ordres de commande (23) coïncidants.

11. Produit de programme informatique comprenant des ordres qui incitent l'unité de calcul, lorsqu'ils sont réalisés sur une unité de calcul, en particulier une salle de contrôle, un régulateur de cluster, un régulateur de parc éolien (10) ou une commande d'éolienne, à réaliser un procédé selon l'une des revendications 1 à 10.

12. Dispositif de réalisation du procédé selon l'une des revendications 1 à 10, comprenant au moins une interface de données (14a à 14f) pour la liaison avec plusieurs dispositifs de commande (42) pour la génération d'ordres de commande et d'ordres d'annulation de commande,
dans lequel le dispositif (10) est un régulateur de parc éolien (10) pouvant être relié aux plusieurs éoliennes par le biais d'au moins une liaison de données (12) qui présente une mémoire (18) pour l'enregistrement d'ordres de commande (23) et est conçu afin de transmettre pour la réalisation de l'ordre de commande (23) avec la priorité la plus élevée et le moment de réception le plus ancien comme ordre de commande (36) réalisé actuellement, l'ordre de commande (36) à réaliser actuellement par le biais de la liaison de données (12) à l'éolienne (100) associée à l'ordre de commande (23).

13. Dispositif selon la revendication 12, dans lequel le dispositif (10) présente au moins une mémoire (18) avec plusieurs zones de mémoire (20a, 20b), dans lequel chaque zone de mémoire est associée précisément à une éolienne (100) qui peut être reliée au dispositif (10), dans lequel les ordres de commande (23) coïncidants d'une éolienne (100) peuvent être enregistrés dans la zone de mémoire (20a, 20b) associée à l'éolienne (100).

14. Système avec un dispositif (10) selon l'une des revendications 11 à 13 et plusieurs dispositifs de commande (42) pour la génération d'ordres de commande (13) et d'ordres d'annulation de commande (15) ainsi que plusieurs éoliennes (100) pour la réalisation des ordres de commande (13).
